# FASCICULE DE BREVET EUROPEEN

(11) **EP 2 734 813 B1**
(45) Date de publication et mention de la délivrance du brevet: **11.03.2020**
(21) Numéro de dépôt: 12750441.3
(22) Date de dépôt: 20.07.2012
(51) Int. Cl.: G01D 5/34

(54) **DISPOSITIF DE MESURE DE DEPLACEMENT NUMERIQUE**
DIGITALE BEWEGUNGSMESSUNGVORRICHTUNG
DIGITAL MOVEMENT MEASURING DEVICE

(30) Priorité: 21.07.2011 FR 1156629
(43) Date de publication de la demande: 28.05.2014
(73) Titulaire: Arnold, Bertrand, London W6 9NY (GB); Benarrosh, Jean-Claude, 6942 Savosa (CH); Benarrosh, Helen, London W6 9NY (GB)
(72) Inventeur: ARNOLD, Bertrand, London W6 9NY (GB)
(74) Mandataire: Santarelli
(86) Numéro de dépôt international: PCT/FR2012/051734
(87) Numéro de publication internationale: WO 2013/011249

(56) Documents cités:
- EP-A1- 2 108 925
- FR-A1- 2 565 216
- GB-A- 2 357 334
- US-A1- 2009 248 351
- US-B1- 6 642 507

## Description

L'invention est relative à un dispositif de mesure de déplacement. La notion de mesure de déplacement s'étend ici à la mesure d'une position par rapport à une position de référence. De façon générale, un dispositif de mesure de déplacement, enregistre une information analogique issue d'un capteur, la convertit en donnée numérique, et la transmet à un calculateur afin que la mesure de déplacement soit exploitée.

Un dispositif de mesure de déplacement utilisant un capteur optique est présenté dans le document US 2009/0248351. Un élément mobile se déplace selon une direction perpendiculaire à celle de la direction d'émission d'un faisceau lumineux et un capteur optique linéaire à réseau de pixels de type CCD (« Charged Coupled Device ») ou CMOS (Complementary Metal Oxide Semiconductor), enregistre les données relatives au flux lumineux transmis partiellement obstrué par l'élément mobile ainsi obtenu. L'information analogique issue des capteurs est convertie en données numériques qui sont intégrées à un module de calcul qui à partir de celles-ci détermine la position de l'élément mobile Le document US6642507 décrit un dispositif de mesure de déplacement selon l'état de la technique.

Un tel dispositif présente des désavantages, en particulier la conversion de l'ensemble des informations analogiques issues du capteur en données numériques. En effet, le bruit analogique s'additionne aux erreurs et au bruit de la conversion numérique. Ce bruit indésirable limite la dynamique (rapport signal sur bruit) du signal mesuré. En outre, la conversion nécessite un temps et une puissance de calcul non négligeables.

En particulier, lorsque le dispositif est utilisé dans un microphone, le bruit de fond et la conversion analogique-numérique sont considérés comme les principaux facteurs limitatifs de la dynamique.

Il apparaît donc avantageux de contourner la limite dynamique analogique et de limiter autant que ce peut les inconvénients de la conversion analogique-numérique.

Pour cela, l'invention propose un dispositif de mesure de déplacement d'un élément mobile se déplaçant selon au moins une direction, comprenant :
- une source lumineuse adaptée à émettre un faisceau lumineux ;
- au moins un organe optique apte à intercepter le faisceau lumineux et relié audit élément mobile de manière à suivre son mouvement ;
- au moins un capteur à pixels apte à capter le faisceau transmis déterminé par la position relative de l'organe optique par rapport à la source lumineuse, les pixels étant disposés de manière à ce que certains au moins d'entre eux reçoivent un éclairement qui varie avec la position de l'élément mobile au cours de son mouvement ;
- un module comparateur apte à comparer les valeurs issues des pixels dudit au moins un capteur à deux seuils distincts et à leur assigner des valeurs logiques telles que :
- à toutes valeurs lumineuses inférieures au premier seuil est assignée une même première valeur logique ;
- à toutes valeurs lumineuses supérieures au deuxième seuil est assignée une même deuxième valeur logique ;
- à toutes valeurs lumineuses situées entre les deux seuils est respectivement assignée une conversion numérique de cette valeur représentative en une valeur apte à être traitée par les moyens de calcul ; et
- un module de calcul apte à déterminer la position de l'élément mobile à partir des données issues du module comparateur.

L'utilisation d'un module comparateur permet d'assigner à certains pixels du capteur une valeur logique qui ne correspond pas nécessairement à la conversion du signal analogique reçu par le capteur en signal numérique. Ainsi le dispositif n'est pas uniquement dépendant de la performance d'un convertisseur ou de moyens de calcul associés.

De ce fait, les temps de calcul nécessaires à la détermination de la position de l'élément mobile sont réduits, de même que la puissance de calcul associée. La transmission des données peut donc être simplifiée et sa vitesse augmentée.

On notera qu'en outre, la précision de la détermination de la position de l'élément mobile n'est plus dépendante que du nombre de pixels choisis et qu'il suffit d'augmenter ce nombre pour l'améliorer.

En particulier, la première valeur logique peut être la valeur 0 et la deuxième valeur logique la valeur 1.

Les seuils peuvent prendre n'importe quelle valeur comprise entre 0 et 1, en particulier un premier seuil par exemple compris entre 0 et 0.5 et un second seuil compris entre 0.5 et 1. Par exemple, le premier seuil est égal à 0.1 et le second seuil à 0.9.

Ceci permet notamment de déterminer avec précision la position de l'organe optique en ne convertissant que quelques valeurs analogiques, ce qui limite l'utilisation du convertisseur tout en augmentant la précision globale du dispositif.

Selon un mode de réalisation particulier, l'organe optique comprend un cache dont au moins une partie du contour forme un angle non nul avec ladite au moins direction du mouvement de l'élément mobile.

Par exemple, il s'agit d'un cache massif dont le mouvement du contour par rapport à la source lumineuse fait varier l'éclairement reçu par les pixels du capteur.

Alternativement, il s'agit d'un cache comprenant une ouverture ou une fente dont le mouvement du contour interne fait varier l'éclairement reçu par les pixels du capteur.

Selon un autre mode de réalisation particulier, l'organe optique est adapté à réfléchir une partie du faisceau lumineux.

Dans ce cas, l'organe optique, dit de réflexion, réfléchit en fonction de son mouvement une partie variable du faisceau lumineux. Chaque partie réfléchie du faisceau lumineux est alors projetée sur le capteur.

Selon une caractéristique possible, le dispositif comprend en outre un deuxième organe optique adapté à dimensionner l'image du contour du premier organe optique et à en faire la mise au point.

L'utilisation d'un tel organe supplémentaire permet d'améliorer la qualité de l'image reçue par le capteur, en particulier lorsque cet organe est placé dans le chemin optique entre le premier organe optique et le capteur. Pour cela, ce deuxième organe optique est constitué de tous moyens de mise au point, de redirection ou de dimensionnement de cette de l'image du premier organe optique sur le capteur, tels que des lentilles, des fibres optiques ou des miroirs.

Selon une caractéristique possible, le capteur est un capteur optique linéaire formé d'au moins une rangée de pixels disposés selon un motif linéaire.

De cette façon, la position de l'organe optique peut être déterminée de façon simple par calcul de la distance entre les pixels marquant son contour. D'autres arrangements de pixels peuvent toutefois être envisagés.

Afin de corriger d'éventuelles erreurs liées à des erreurs de positionnement ou de calcul, une correction trigonométrique des déplacements de l'organe optique dans d'autres directions que celle du mouvement mesuré est effectuée.

On entend ici par correction trigonométrique le fait de déterminer (calculer) les erreurs de positionnement du capteur en observant les déformations de l'image projetée par rapport au capteur et en en déduisant l'angle de rotation du capteur par rapport à son point d'attache sur la partie mobile.

Le terme trigonométrique provient du fait que l'on utilise dans cet objectif des relations mathématiques de trigonométrie bien connues sur le contour de l'image telle que projetée.

Si l'organe optique a par exemple deux contours parallèles dont la distance l'un par rapport à l'autre est connue au préalable, cette dernière pourra être calculée et confirmée grâce à la mesure de la distance entre les contours de l'image formée sur le capteur optique.

L'absence de mouvement angulaire autour de son point d'attache à la partie mobile, autrement dit l'absence d'erreur de positionnement, se caractérise par une image projetée non déformée sur le capteur

Dans le cas contraire, la déformation géométrique de l'image observée permettra de calculer l'angle de rotation par rapport à la position nominale à l'aide de relations de trigonométrie.

Les lois optiques concernant la projection de la forme ou de l'inclinaison de chaque contour de l'organe optique sur le capteur, ou, le cas échéant, la distance relative de plusieurs contours, permettent en effet de vérifier les données obtenues par des formules mathématiques et de les corriger. D'autres méthodes de correction impliquant une redondance de calcul, un ajout de pixels supplémentaires ou des calibrations d'éléments utilisés peuvent cependant être envisagées.

De cette façon une conversion analogique-numérique n'est pas nécessaire car l'information issue du comparateur est une valeur logique, et donc directement numérique qui permet de limiter les erreurs liées au convertisseur.

Ainsi, en outre, la transmission des données peut être simplifiée et sa vitesse augmentée.

En particulier, la première valeur logique peut être la valeur 0 et la deuxième valeur logique la valeur 1. Dans ce cas particulier, le seuil est égal à 0.5.

Ceci permet notamment de déterminer avec précision la position de l'organe optique en ne convertissant que quelques valeurs analogiques, ce qui limite l'utilisation du convertisseur tout en augmentant la précision globale du dispositif.

A nouveau, la transmission des données peut être simplifiée et sa vitesse augmentée par rapport à des systèmes de l'art antérieur.

En particulier, la première valeur logique peut être la valeur 0 et la deuxième valeur logique la valeur 1. Les seuils peuvent prendre n'importe quelle valeur comprise entre 0 et 1, en particulier un premier seuil par exemple compris entre 0 et 0.5 et un second seuil compris entre 0.5 et 1. Par exemple, le premier seuil est égal à 0.1 et le second seuil à 0.9.

Afin d'obtenir précisément la position physique de chaque pixel du capteur, le dispositif comporte en outre un module d'adressage des pixels dudit au moins un capteur selon la valeur logique leur ayant été assignée.

Ceci permet de faciliter le calcul de la position de l'organe optique.

De façon à détecter d'éventuelles erreurs, les valeurs d'adressage des pixels dont les valeurs captées sont situées entre lesdits premier et second seuils sont comparés au nombre de pixels décomptés dans chaque groupe.

L'invention concerne également un microphone comportant un dispositif de mesure de déplacement selon l'invention.

L'invention concerne également un procédé de mesure de déplacement comportant les étapes suivantes :
- émission d'un faisceau lumineux ;
- positionnement d'un organe optique apte à intercepter le faisceau lumineux et relié audit élément mobile de manière à suivre son mouvement ;
- captage par un capteur à pixels du faisceau transmis déterminé par la position relative de l'organe optique par rapport à la source lumineuse, les pixels étant disposés de manière à ce que certains au moins d'entre eux reçoivent un éclairement variant avec la position de l'élément mobile au cours de son mouvement ;
- comparaison de valeurs issues du captage à deux seuils distincts de manière à leur assigner des valeurs logiques telles que :
- à toutes valeurs lumineuses inférieures au premier seuil est assignée une même première valeur logique ;
- à toutes valeurs lumineuses supérieures au deuxième seuil est assignée une même deuxième valeur logique ;
- à toutes valeurs lumineuses situées entre les deux seuils est respectivement assignée une conversion numérique de cette valeur représentative en une valeur apte à être traitée par les moyens de calcul ; et
- détermination de la position de l'élément mobile à partir des données issues du module comparateur.

D'autres caractéristiques et avantages apparaitront au cours de la description qui va suivre, donnée à titre d'exemple non limitatif et faite en référence aux dessins annexés, sur lesquels :
- la figure 1 est une vue schématique en perspective d'un dispositif de mesure de déplacement selon l'invention ;
- la figure 2a est une vue schématique de la projection de l'image de l'organe optique sur le capteur du dispositif selon l'invention et des pixels de ce même capteur, l'organe optique étant dans une première position ;
- la figure 2b est une vue schématique de la projection de l'image de l'organe optique sur le capteur du dispositif selon l'invention et des pixels de ce même capteur, l'organe optique étant dans une deuxième position ;
- la figure 2c est une vue schématique de la projection de l'image de l'organe optique sur le capteur du dispositif selon l'invention et des pixels de ce même capteur, l'organe optique étant dans une troisième position ;
- la figure 3a est une alternative à la figure 2a, l'organe optique ayant une forme différente et les pixels du capteur étant alignés dans une direction horizontale ;
- la figure 3b est alternative à la figure 2a l'organe optique ayant une forme différente et les pixels du capteur étant alignés dans une direction horizontale ;
- la figure 3c est alternative à la figure 2a l'organe optique ayant une forme différente et les pixels du capteur étant alignés dans une direction horizontale ;
- la figure 4a est une vue schématique de la projection du contour de l'image de l'organe optique sur le capteur du dispositif selon l'invention et des pixels de ce même capteur, les pixels étant dans une configuration correspondant à un premier mode de réalisation ;
- la figure 4b est une vue schématique de la projection du contour de l'image de l'organe optique sur le capteur du dispositif selon l'invention et des pixels de ce même capteur, les pixels étant dans une configuration correspondant à un deuxième mode de réalisation ;
- la figure 4c est une vue schématique de la projection du contour de l'image de l'organe optique sur le capteur du dispositif selon l'invention et des pixels de ce même capteur, les pixels étant dans une configuration correspondant à un troisième mode de réalisation ;
- la figure 4d est une vue schématique de la projection du contour de l'image de l'organe optique sur le capteur du dispositif selon l'invention et des pixels de ce même capteur, les pixels étant dans une configuration correspondant à un quatrième mode de réalisation ;
- la figure 4e est une vue schématique de la projection du contour de l'image de l'organe optique sur le capteur du dispositif selon l'invention et des pixels de ce même capteur, les pixels étant dans une configuration correspondant à un cinquième mode de réalisation ;
- la figure 4f est une vue schématique de la projection du contour de l'image de l'organe optique sur le capteur du dispositif selon l'invention et des pixels de ce même capteur, les pixels étant dans une configuration correspondant à un sixième mode de réalisation ;
- la figure 5a est un agrandissement d'un détail de la figure 2a ;
- la figure 5b est une alternative à la figure 5a, l'organe optique ayant un contour transversal à l'horizontale ; et
- la figure 6 est un schéma par blocs illustrant les relations entre les différents modules selon l'invention.

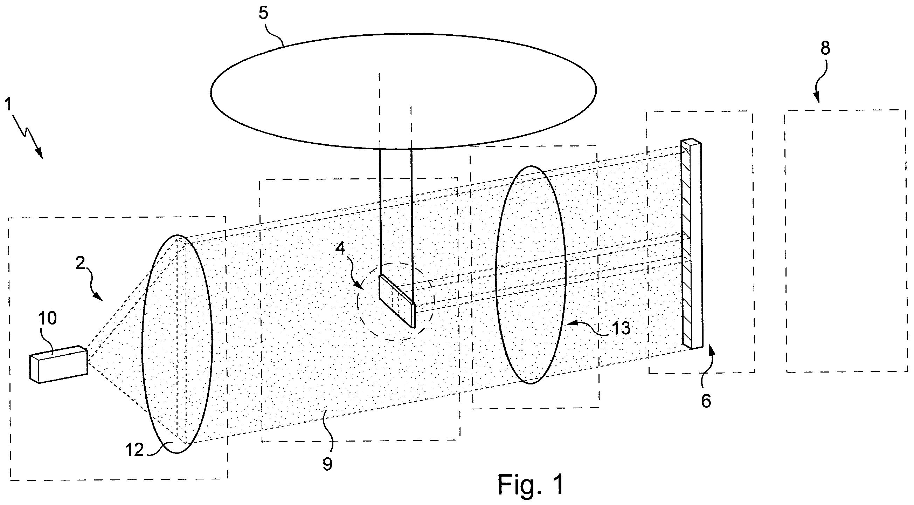

Le dispositif de mesure de déplacement 1 présenté à titre d'exemple à la figure 1 comporte au moins une source lumineuse 2, un organe optique 4 relié à une partie mobile 5 de l'élément dont on mesure le déplacement, un capteur 6, et des moyens d'analyse 8 (représentés ici de façon schématique et non dans sa forme de réalisation finale).

La source lumineuse 2 créé un faisceau lumineux fixe 9 suivant un chemin optique de façon à être capté par le capteur 6.

La source lumineuse 6 est notamment apte à émettre au moins une longueur d'onde adaptée à la sensibilité du capteur, de même que sa puissance, afin d'exploiter une grande partie de sa plage dynamique.

De manière préférentielle, le faisceau lumineux 9 qu'elle génère est d'intensité homogène dans l'espace et constante dans le temps utile de la mesure par le capteur 6.

En variante, le faisceau lumineux 9 peut être plus intense en certaines zones particulières.

Dans le mode de réalisation présenté sur cette figure 1, la source lumineuse est un laser générateur de ligne 10. Toutefois, d'autres solutions peuvent être envisagées.

En particulier, il peut s'agir d'une diode LED, une diode laser ou une barre de diodes lasers, un laser télécentrique, un laser pulsé, un générateur de ligne laser, ou encore des combinaisons de toutes ces solutions avec une ou plusieurs lentilles, un ensemble de fibres optiques, un cône de fibres optiques (« taper » en terminologie anglo-saxonne), un collimateur, un ou plusieurs miroirs.

De façon optionnelle, la source lumineuse 2 peut être associée à un ou plusieurs dispositifs optiques 12 permettant de former un faisceau lumineux 9 plus homogène, de le dimensionner, de le déformer ou de le diriger. Dans le mode de réalisation présenté à la figure 1, le dispositif optique 12 est une lentille.

Dans d'autres modes de réalisation non représentés, la source lumineuse 2 est dupliquée de manière à générer des plans lumineux parallèles vers plusieurs capteurs ou un capteur à plusieurs rangées de pixels. Cette ou ces sources lumineuses sont notamment aptes à émettre plusieurs longueurs d'ondes ou des plans lumineux d'intensités différentes afin d'améliorer la fiabilité du capteur. En particulier, chaque longueur d'onde émise par la ou les sources est choisie de manière à limiter les interférences avec la lumière ambiante.

Après passage à travers la lentille 12 ou tout autre dispositif optique parmi ceux-cités ci-dessus, le faisceau lumineux 9 est intercepté dans son chemin optique par l'organe optique 4.

L'organe optique 4 est un élément solidaire ou faisant partie de la partie mobile 5 dont on veut mesurer le mouvement. Il est de préférence réalisé dans un matériau rigide, opaque ou réfléchissant (ou possédant un revêtement réfléchissant), ou encore déviant la lumière (fibre optique) selon les différents modes de réalisation. Il est de préférence de masse négligeable par rapport à celle de la partie mobile afin de limiter toute influence qu'elle pourrait avoir sur son mouvement.

L'organe optique 4 est positionné dans un plan contenant la ou les dimension(s) spatiale(s) mesurée(s) du mouvement ou dans un plan parallèle à ce dernier plan. Dans tous les cas, le plan dans lequel se trouve l'organe optique 4 forme une intersection avec le faisceau lumineux 9.

Dans le mode de réalisation présenté à la figure 1, la partie mobile 5 a un mouvement vertical. L'organe optique 4 est ici opaque et intercepte le faisceau lumineux 9 qui est projeté de façon transversale, selon une direction avantageusement perpendiculaire au mouvement, c'est-à-dire horizontalement.

De cette façon, l'organe optique 4 obstrue, selon son mouvement, une partie variable du faisceau lumineux et délimite une zone variable que l'on nommera par la suite zone d'ombre. Chaque partie non obstruée est alors projetée sur et captée par les pixels du capteur 6.

Dans un premier mode de réalisation alternatif non représenté, l'organe optique 4 comprend des moyens de réflexion tels qu'un ou plusieurs miroirs afin de réfléchir, selon son mouvement, une partie variable du faisceau lumineux 9. Chaque portion réfléchie du faisceau lumineux 9 est alors projetée sur les pixels du capteur 6.

Dans tous les cas, les dimensions de l'organe optique 4 sont choisies de manière à ce que la longueur maximale et l'épaisseur de la zone d'ombre ou l'image lumineuse projetée sur le capteur soient adaptées aux dimensions de la surface sensible totale du capteur.

Par exemple, dans le mode de réalisation présenté à la figure 1, l'organe optique de 18 µm de hauteur est centré sur un capteur linéaire de 256 pixels, chaque pixel étant un carré de 12 µm de côté.

En particulier, le faisceau lumineux 9 peut avoir une épaisseur telle que la lumière qui en est issue et est projetée sur le capteur 6 recouvre une grande partie ou l'intégralité de la surface sensible des pixels du capteur 6.

Le dispositif 1 peut également comporter sur le chemin optique entre l'organe optique 4 et le capteur 6, un organe optique de projection 13, fixe, et dont le rôle est notamment d'améliorer la qualité de l'image reçue par le capteur.

En particulier, cet organe optique de projection 10 comprend, individuellement ou en combinaison, des moyens de mise au point de l'image optique sur le capteur, des moyens de redirection du faisceau lumineux 9 en direction du capteur 6, et des moyens de dimensionnement de l'image de l'organe optique 4 sur le capteur 6.

Dans le mode de réalisation présenté à la figure 1, l'organe optique de projection 13 est une lentille piano-concave.

D'autres éléments peuvent cependant être envisagés, tels qu'une lentille convergente ou convexe, un miroir, de la fibre optique, ou encore un cône de fibres optiques (« taper »).

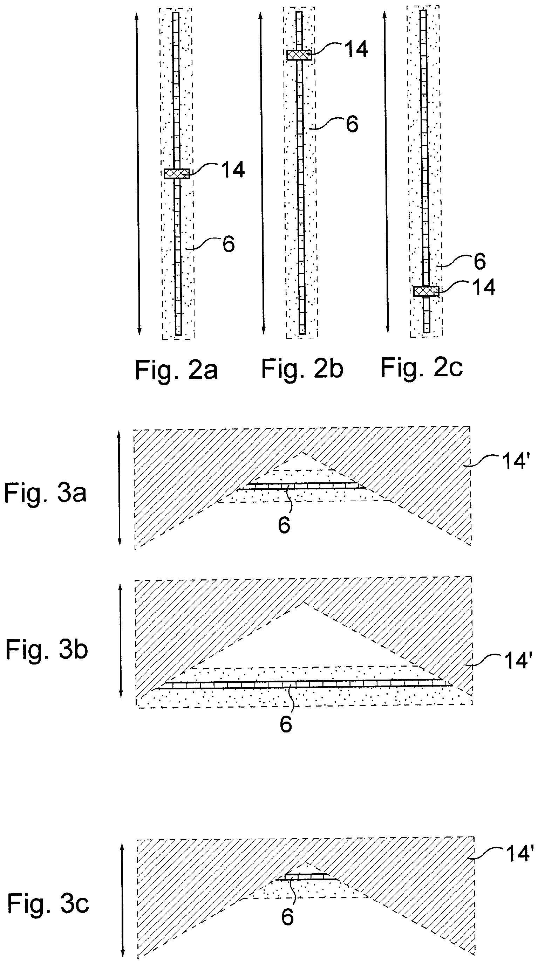

Dans le mode de réalisation présenté à la figure 1, ainsi qu'aux figures 2a-c, 3a-c 4a-f et 5a-b, le capteur 6 est un capteur optique linéaire formé d'au moins une rangée de pixels alignés ou disposés selon un motif linéaire, autrement dit les pixels s'étendent le long d'une ligne pour former une surface sensible linéaire continue.

Le capteur 6 est positionné de sorte que le mouvement de l'image de l'organe optique 4 sur ce dernier soit proportionnel au mouvement de la partie mobile 5 dans la ou les dimensions spatiales mesurées.

Le nombre de pixels du capteur 6 est fonction de la précision numérique additionnelle voulue par rapport à un pixel unique. Si cette précision additionnelle est de n bits, le nombre de pixels du capteur est 2ⁿ. Ainsi, par exemple, une précision additionnelle de 8 bits nécessite 256 pixels.

Le capteur 6 est notamment un capteur CCD (« Charged Coupled Device »), CMOS (Complementary Metal Oxide Semiconductor), de type photodiode array ou à obturateur électronique ou optique.

Les figures 2a-c illustrent trois positions de la zone d'ombre 14 projetée par l'organe optique 4 de la figure 1. Sur ces figures, la zone d'ombre 14 est un rectangle dont les côtés sont parallèles à ceux des pixels qui se déplace le long de la direction d'alignement des pixels du capteur 6.

Sur la figure 2a, la partie mobile étant dans une position médiane, l'organe optique 4 est en une position médiane, la zone d'ombre 14 a donc une position médiane sur le réseau de pixels du capteur 6.

Sur la figure 2b, l'organe optique 4 est en position haute, la zone d'ombre 14 est donc placée vers les pixels supérieurs sur le capteur 6.

Sur la figure 2c, l'organe optique 4 est en position basse, la zone d'ombre 14 est donc placée vers les pixels inférieurs sur le capteur 6.

Alternativement, l'organe optique 4 a deux contours non parallèles formant un angle non nul avec la direction du mouvement de l'élément mobile 5, comme par exemple l'organe optique dont la zone d'ombre 14' est représentée aux figures 3a-3c. On notera que sur ces figures, la direction du mouvement de l'élément mobile 5 est perpendiculaire à celle de l'alignement des pixels du capteur 6.

Ici la zone d'ombre 14' a la forme d'un rectangle évidé par un triangle dont les contours des bords internes viennent obstruer la lumière reçue par les pixels du capteur 6.

Ainsi sur la figure 3a, l'organe optique 4 est en position médiane, la zone d'ombre 14' couvre ainsi les pixels périphériques et une partie des pixels de la partie centrale du réseau capteur optique 6.

Sur la figure 3b, l'organe optique 4 est en position haute, la zone d'ombre 14' couvre ainsi les pixels périphériques du capteur optique 6.

Sur la figure 3c, l'organe optique 4 est en position basse, la zone d'ombre 14' couvre ainsi quasiment tous les pixels périphériques du capteur optique 6 à l'exception des pixels médians.

On va maintenant décrire différents arrangements possibles du réseau de pixels du capteur optique 6.

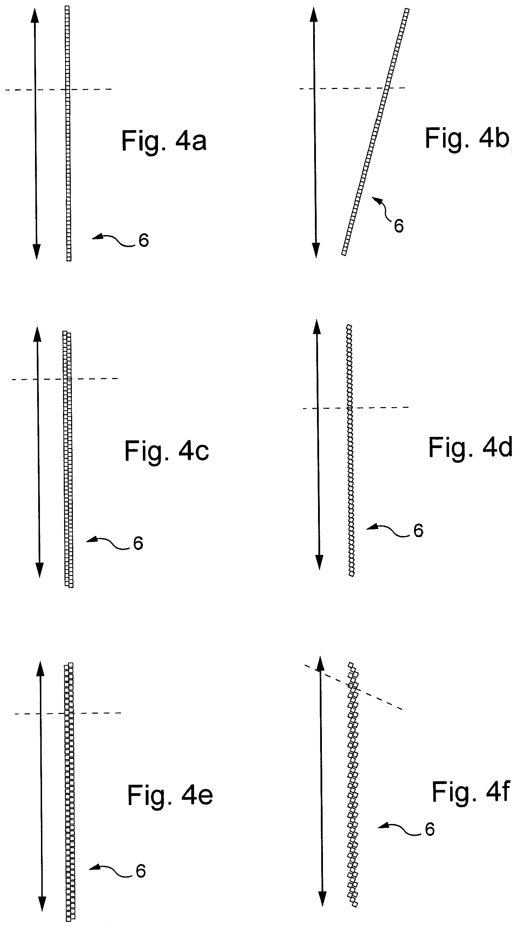

Dans les modes de réalisation particuliers présentés aux figures 4c, 4e et 4f, les pixels sont alignés selon deux rangées (mais plus peuvent être envisagés) de manière à fournir une correction mécanique des mouvements latéraux indésirables de l'organe optique ou d'autres éléments du dispositif, un suréchantillonage, et/ou une amélioration de la dynamique du capteur 6.

Par exemple, chaque rangée de pixels est sensible à une longueur d'onde différente.

Alternativement, dans les modes de réalisation présentés aux figures 4b, 4d et 4f, les pixels sont inclinés les uns par rapport aux autres.

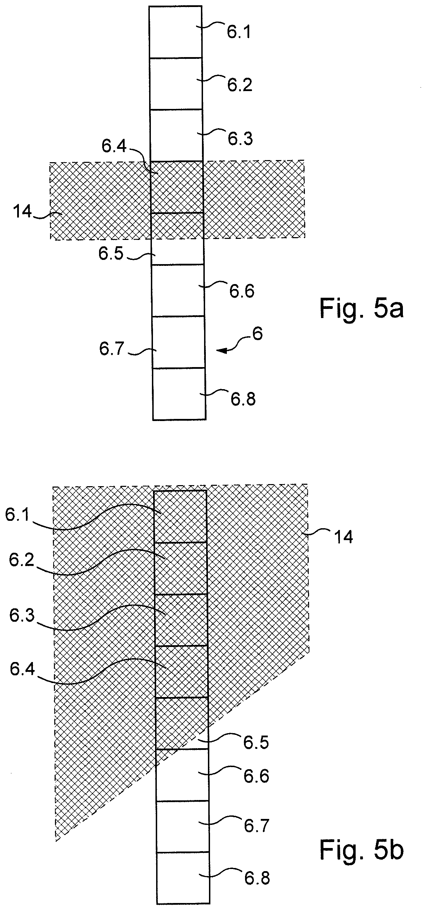

Dans ce mode de réalisation pour lequel un agrandissement de la figure 2a est présenté à la figure 5a, le contour de la zone d'ombre et les côtés des pixels sont parallèles. Toutefois, ils peuvent être obliques comme par exemple dans le mode de réalisation illustré figure 5b.

Sur ces figures, la zone d'ombre 14 évolue avec le mouvement de la partie mobile 5 à travers le mouvement de l'organe optique 4, en l'occurrence le long de la verticale. Ainsi la zone d'ombre 14 éclaire différents pixels du capteur 6 à chaque position.

Plus particulièrement, sur la figure 5a, la zone d'ombre 14, d'une hauteur correspondant à un pixel et demi (cette hauteur varie avec les dimensions de l'organe optique 4), assombrit entièrement le pixel 6.4 et assombrit partiellement le pixel 6.5. Les autres pixels, 6.1, 6.2, 6.3, 6.6, 6.7 et 6.8 sont quant à eux totalement éclairés par le faisceau lumineux 9 issu de la source lumineuse 2.

A chacun des pixels 6.n est allouée une valeur analogique ou numérique proportionnelle à la lumière reçue délivrée par chaque pixel. Cette valeur est ensuite analysée par les moyens d'analyse 8. En cas de mesure unique, elle permet le calcul de la position de la partie mobile 5. En cas de mesure cyclique, elle permet le calcul d'un signal numérique représentatif des vibrations de la partie mobile.

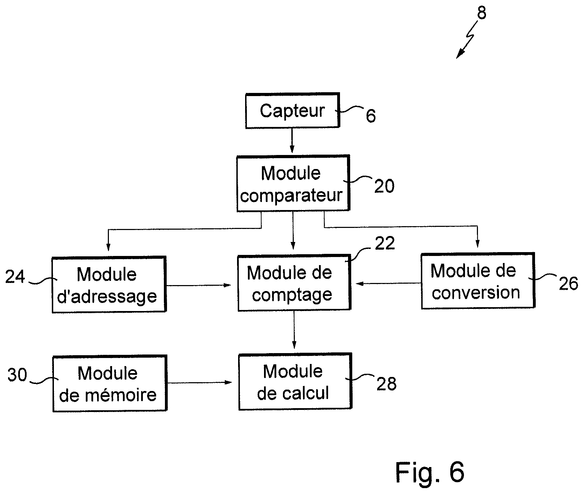

La figure 6 illustre le fonctionnement des moyens d'analyse 8 à travers les différents modules qu'il comporte. Il convient de noter que ces modules ne sont pas nécessairement indépendants et peuvent être intégrés directement dans certains éléments tels que le capteur. Par exemple, le module d'adressage peut être intégré directement au capteur.

Les valeurs électriques ou numériques des pixels du capteur 6 sont transmises au module comparateur 20 par exemple par une sortie parallèle adressée ou sous la forme d'un train d'impulsion en fonction du type de capteur utilisé.

Le module comparateur 20 trie les pixels en comparant leur valeur analogique ou numérique à un ou plusieurs seuils.

Dans un premier mode de réalisation, il n'y a qu'un seul seuil S, par exemple correspondant à la moitié de la valeur de saturation en lumière du pixel.

Les pixels délivrant une valeur inférieure à ce seuil S sont considérés comme étant exclusivement dans une zone d'ombre. Leurs valeurs sont ignorées et une valeur logique GB (groupe B pour bas) est envoyée au module de comptage 22 pour les dénombrer.

Les pixels délivrant une valeur supérieure à ce seuil S sont considérés comme étant exclusivement dans une zone éclairée. Leurs valeurs sont ignorées et une valeur logique GH (groupe H pour haut) est envoyée au module de comptage 22 pour les dénombrer.

Dans un second mode de réalisation, le module comparateur 20 trie les pixels en les comparants à deux seuils, un seuil bas SB et un seuil haut SH. Le premier seuil correspond de préférence à une valeur comprise entre 0 et 0.5 fois la valeur de saturation en lumière d'un pixel, par exemple 0.1. Le second seuil correspond de préférence à une valeur comprise entre 0.5 et 1 fois la valeur de saturation en lumière d'un pixel, par exemple 0.9.

Les pixels délivrant une valeur inférieure au seuil SB sont considérés comme étant exclusivement dans une zone d'ombre. Leurs valeurs sont ignorées et une valeur logique GB (groupe B pour bas) est envoyée au module de comptage 22 pour les dénombrer.

Les pixels délivrant une valeur supérieure au seuil SH sont considérés comme étant exclusivement dans une zone éclairée. Leurs valeurs sont ignorées et une valeur logique GH (groupe H pour haut) est envoyée au module de comptage 22 pour les dénombrer.

Les valeurs comprises entre les deux seuils sont transmises au module de conversion 26. Elles correspondent aux pixels limitrophes partiellement éclairés (6.4 et 6.5 sur la figure 5a) qui déterminent le contour de l'organe optique 4.

Le module de conversion 26 est soit un convertisseur analogique/numérique dans le cas d'un capteur optique analogique, soit un convertisseur numérique/numérique dans le cas d'un capteur optique numérique ou à convertisseur intégré.

Ainsi le module de conversion 26 convertit la valeur analogique ou numérique issue du pixel analysé en une valeur logique (numérique) qui est envoyée au module de comptage 22.

Quelque soit le mode de réalisation, en parallèle au fonctionnement du module comparateur 20 et du module de conversion 26, le module d'adressage 24 collecte l'adresse de chaque pixel, autrement dit sa position physique sur le capteur.

L'adresse est soit fournie par le capteur 6, soit obtenue par identification des sorties parallèles du capteur (sorties indépendantes par pixel ou par groupes de pixels, pour permettre une fréquence de lecture plus rapide), soit obtenue par le comptage d'arrivée des données en série soit une combinaison de ces moyens. Les informations collectées sont transmises au module de comptage 22.

Le module de comptage 22 dénombre et assigne les pixels à des groupes en fonction des valeurs logiques transmises par le module comparateur 20. Il y associe également les informations provenant du module d'adressage 24. Ainsi, à chaque pixel est associé une adresse et une valeur logique.

Dans le cas d'un mode de réalisation à deux seuils, les valeurs logiques indiquant un pixel limitrophe (i.e. délivrant une valeur entre les seuils SB et SH) permettent notamment de confirmer la bonne délimitation des groupes de pixels.

Au terme du cycle d'analyse, le nombre, le type et l'adresse des pixels contenus dans chaque groupe ainsi que leur désignation son envoyés au module de calcul 28.

Le module de calcul 28 collecte les données du module de comptage 22 et corrige les éventuelles erreurs en comparant les informations reçues à des informations de référence et en calculant leur décalage numérique.

Un premier type de correction inclus la comparaison des valeurs d'adressage des pixels dits limitrophes aux pixels décomptés dans chaque groupe. Si une disparité est détectée, elle est corrigée par le module de calcul 28.

Alternativement ou en complément, le module de calcul 28 utilise les informations du module de mémoire 30 qui contient des données de référence pour les comparer aux données mesurées. Ces informations correspondent aux données obtenues lorsque la partie mobile est dans sa position de référence. De telles données sont réinitialisées ou enregistrées par exemple lors d'une procédure de calibration. Pour une mesure relative à la position précédente ou une mesure de déplacement on utilisera les données de la mesure précédente.

Le module de mémoire 30 peut contenir également des caractéristiques du dispositif 1 comme les dimensions de l'organe optique 4 et toute autre donnée permettant les corrections d'erreur.

En particulier, lors de la calibration, le module de mémoire intègre un point ou un ensemble de points de calibration de référence ainsi qu'un modèle d'interpolation pour les valeurs intermédiaires. Une telle interpolation suit un modèle linéaire ou inclut des modèles de déformation optique ou de distorsions électroniques.

Alternativement ou en complément, un protocole d'auto calibration est implémenté dans le dispositif 1 pour permettre la prise en compte de l'usure, des modifications du milieu dans lequel la mesure est opérée (pression, température, etc.) ou de la déformation de l'organe optique 4 ou tout autre élément du dispositif.

Pour cela les informations comme la position de repos de la partie mobile 5 et/ou les dimensions de l'organe optique 4 sont réactualisées périodiquement.

Enfin, les lois optiques concernant la projection du contour de l'organe optique 4 permet la vérification et la correction des données. En particulier, une correction trigonométrique des déplacements de l'organe optique 4 dans d'autres dimensions spatiales que celles du mouvement mesuré peut être opérée.

Une fois les éventuelles erreurs corrigées, le module de calcul 28 détermine les pixels recevant l'image du contour de l'organe optique 4. Dans le cas où l'image du contour se trouve entre deux pixels, la succession consécutive d'un pixel d'un groupe et d'un pixel d'un groupe différent indique cette position. Le premier pixel après la transition de groupe est sélectionné comme localisation du contour.

Dans le cas du mode de réalisation à deux seuils, ces pixels sont notamment à chercher dans le groupe associé aux valeurs entre les deux seuils.

Ainsi la position du contour de l'organe optique 4 est déterminée, et par voie de conséquence celle de la partie mobile 5 l'est également.

En particulier, le module de calcul 28 possède une précision N+n où N est la précision en bits du module de conversion 26 et où n le nombre de pixels du capteur. La précision du dispositif est donc augmentée par rapport à la précision du module de conversion 26.

## Revendications

1. Dispositif de mesure de déplacement d'un élément mobile se déplaçant selon au moins une direction, **caractérisé en ce qu'**il comprend :
- une source lumineuse adaptée à émettre un faisceau lumineux ;
- au moins un organe optique apte à intercepter le faisceau lumineux et relié audit élément mobile de manière à suivre son mouvement ;
- au moins un capteur à pixels apte à capter le faisceau transmis déterminé par la position relative de l'organe optique par rapport à la source lumineuse, les pixels étant disposés de manière à ce que certains au moins d'entre eux reçoivent un éclairement qui varie avec la position de l'élément mobile au cours de son mouvement ;
- un module comparateur apte à comparer les valeurs issues des pixels dudit au moins un capteur à deux seuils distincts et à leur assigner des valeurs logiques telles que :
- à toutes valeurs lumineuses inférieures au premier seuil est assignée une même première valeur logique ;
- à toutes valeurs lumineuses supérieures au deuxième seuil est assignée une même deuxième valeur logique ;
- à toutes valeurs lumineuses situées entre les deux seuils est respectivement assignée une conversion numérique de cette valeur représentative en une valeur apte à être traitée par les moyens de calcul ; et
- un module de calcul apte à déterminer la position de l'élément mobile à partir des données issues du module comparateur.

2. Dispositif de mesure de déplacement selon la revendication 1, **caractérisé en ce que** l'organe optique comprend un cache dont au moins une partie du contour forme un angle non nul avec ladite au moins direction du mouvement de l'élément mobile.

3. Dispositif de mesure de déplacement selon la revendication 1, **caractérisé en ce que** l'organe optique est adapté à réfléchir une partie du faisceau lumineux.

4. Dispositif de mesure de déplacement selon l'une des revendications 1 à 3, **caractérisé en ce qu'**il comporte en outre un second organe optique adapté à dimensionner l'image du contour du premier organe optique et à en faire la mise au point.

5. Dispositif de mesure de déplacement selon l'une des revendications 1 à 4, **caractérisé en ce que** ledit au moins un capteur est un capteur optique linéaire formé d'au moins une rangée de pixels disposés selon un motif linéaire.

6. Dispositif de mesure de déplacement selon l'une des revendications 1 à 5, **caractérisé en ce qu'**il réalise une correction trigonométrique des déplacements de l'organe optique dans d'autres directions que celle du mouvement mesuré.

7. Dispositif de mesure de déplacement selon l'une des revendications 1 à 6, **caractérisé en ce qu'**il comporte en outre un module d'adressage des pixels dudit au moins un capteur selon l'ordre d'arrivée des données.

8. Dispositif de mesure de déplacement selon l'une des revendications 1 à 7, **caractérisé en ce qu'**il comporte en outre un module de comptage des pixels dudit au moins un capteur formant des groupes selon leur adressage et la valeur logique leur ayant été assignée.

9. Dispositif de mesure de déplacement selon les revendications 7 et 8, **caractérisé en ce que** les valeurs d'adressage des pixels dont les valeurs captées sont situées entre lesdits premier et second seuils sont comparés au nombre de pixels décomptés dans chaque groupe.

10. Microphone **caractérisé en ce qu'**il comporte un dispositif de mesure de déplacement selon l'une des revendications 1 à 9.

11. Procédé de mesure de déplacement d'un élément mobile se déplaçant selon au moins une direction, **caractérisé en ce qu'**il comporte les étapes suivantes :
- émission d'un faisceau lumineux ;
- positionnement d'un organe optique apte à intercepter le faisceau lumineux et relié audit élément mobile de manière à suivre son mouvement ;
- captage par un capteur à pixels du faisceau transmis déterminé par la position relative de l'organe optique par rapport à la source lumineuse, les pixels étant disposés de manière à ce que certains au moins d'entre eux reçoivent un éclairement variant avec la position de l'élément mobile au cours de son mouvement ;
- comparaison de valeurs issues du captage à deux seuils distincts de manière à leur assigner des valeurs logiques telles que :
- à toutes valeurs lumineuses inférieures au premier seuil est assignée une même première valeur logique ;
- à toutes valeurs lumineuses supérieures au deuxième seuil est assignée une même deuxième valeur logique ;
- à toutes valeurs lumineuses situées entre les deux seuils est respectivement assignée une conversion numérique de cette valeur représentative en une valeur apte à être traitée par les moyens de calcul ; et
- détermination de la position de l'élément mobile à part des données issues du module comparateur.

## Patentansprüche

1. Vorrichtung zum Messen der Verlagerung eines beweglichen Elements, das sich in zumindest einer Richtung verlagert, **dadurch gekennzeichnet, dass** sie enthält:
- eine Lichtquelle, die dazu ausgelegt ist, einen Lichtstrahl zu emittieren;
- zumindest ein optisches Organ, das dazu geeignet ist, den Lichtstrahl abzufangen, und das mit dem beweglichen Element so verbunden ist, dass es seiner Bewegung folgt;
- zumindest einen Pixelsensor, der dazu geeignet ist, den durch die relative Position des optischen Organs in Bezug auf die Lichtquelle bestimmten Sendestrahl zu erfassen, wobei die Pixel so angeordnet sind, dass zumindest bestimmte von ihnen eine Ausleuchtung erhalten, die sich mit der Position des beweglichen Elements während seiner Bewegung verändert;
- ein Vergleichsmodul, das dazu geeignet ist, die von den Pixeln des zumindest einen Sensors stammenden Werte mit zwei verschiedenen Schwellenwerten zu vergleichen und ihnen logische Werte zuzuweisen, so dass
- allen Lichtwerten unterhalb des ersten Schwellenwerts der gleiche erste logische Wert zugewiesen wird;
- allen Lichtwerten oberhalb des zweiten Schwellenwerts der gleiche zweite logische Wert zugewiesen wird;
- allen Lichtwerten zwischen den beiden Schwellenwerten jeweils eine digitale Umwandlung dieses repräsentativen Wertes in einen Wert zugewiesen wird, der dazu geeignet ist, von den Rechenmitteln verarbeitet zu werden; und
- ein Rechenmodul, das dazu geeignet ist, die Position des beweglichen Elements ausgehend von den vom Vergleichsmodul stammenden Daten zu bestimmen.

2. Vorrichtung zum Messen der Verlagerung nach Anspruch 1, **dadurch gekennzeichnet, dass** das optische Organ eine Blende enthält, von welcher zumindest ein Teil der Kontur einen Winkel ungleich null mit der zumindest einen Richtung der Bewegung des beweglichen Elements bildet.

3. Vorrichtung zum Messen der Verlagerung nach Anspruch 1, **dadurch gekennzeichnet, dass** das optische Organ dazu ausgelegt ist, einen Teil des Lichtstrahls zu reflektieren.

4. Vorrichtung zum Messen der Verlagerung nach einem der Ansprüche 1 bis 3, **dadurch gekennzeichnet, dass** sie ferner ein zweites optisches Organ enthält, das dazu ausgelegt ist, die Abbildung der Kontur des ersten optischen Organes zu dimensionieren und scharfzustellen.

5. Vorrichtung zum Messen der Verlagerung nach einem der Ansprüche 1 bis 4, **dadurch gekennzeichnet, dass** der zumindest eine Sensor ein linearer optischer Sensor ist, der aus zumindest einer Reihe von Pixeln gebildet ist, die in einem linearen Muster angeordnet sind.

6. Vorrichtung zum Messen der Verlagerung nach einem der Ansprüche 1 bis 5, **dadurch gekennzeichnet, dass** sie eine trigonometrische Korrektur der Verlagerungen des optischen Organs in anderen Richtungen als in der der gemessenen Bewegung durchführt.

7. Vorrichtung zum Messen der Verlagerung nach einem der Ansprüche 1 bis 6, **dadurch gekennzeichnet, dass** sie ferner ein Modul zum Adressieren der Pixel des zumindest einen Sensors in der Reihenfolge des Eintreffens der Daten enthält.

8. Vorrichtung zum Messen der Verlagerung nach einem der Ansprüche 1 bis 7, **dadurch gekennzeichnet, dass** sie ferner ein Modul zum Zählen der Pixel des zumindest einen Sensors enthält, die entsprechend ihrer Adressierung und dem ihnen zugewiesenen logischen Wert Gruppen bilden.

9. Vorrichtung zum Messen der Verlagerung nach den Ansprüchen 7 und 8, **dadurch gekennzeichnet, dass** die Adressierungswerte der Pixel, deren erfasste Werte sich zwischen dem ersten und zweiten Schwellenwert befinden, mit der Anzahl der in jeder Gruppe gezählten Pixel verglichen werden.

10. Mikrophon, **dadurch gekennzeichnet, dass** es eine Vorrichtung zum Messen der Verlagerung nach einem der Ansprüche 1 bis 9 enthält.

11. Verfahren zum Messen der Verlagerung eines beweglichen Elements, das sich in zumindest einer Richtung verlagert, **dadurch gekennzeichnet, dass** es die nachstehenden Schritte umfasst:
- Emittieren eines Lichtstrahls;
- Positionieren eines optischen Organs, das dazu geeignet ist, den Lichtstrahl abzufangen und das mit dem beweglichen Element so verbunden ist, dass es seiner Bewegung folgt;
- Erfassen des durch die relative Position des optischen Organs in Bezug auf die Lichtquelle bestimmten Sendestrahls von einem Pixelsensor, wobei die Pixel so angeordnet sind, dass zumindest bestimmte von ihnen eine Ausleuchtung erhalten, die sich mit der Position des beweglichen Elements während seiner Bewegung verändert;
- Vergleichen der Werte aus der Erfassung mit zwei verschiedenen Schwellenwerten, so dass ihnen logische Werte zugwiesen werden, so dass
- allen Lichtwerten unterhalb des ersten Schwellenwerts der gleiche erste logische Wert zugewiesen wird;
- allen Lichtwerten oberhalb des zweiten Schwellenwerts der gleiche zweite logische Wert zugewiesen wird;
- allen Lichtwerten zwischen den beiden Schwellenwerten jeweils eine digitale Umwandlung dieses repräsentativen Wertes in einen Wert zugewiesen wird, der dazu geeignet ist, von den Rechenmitteln verarbeitet zu werden; und
- Bestimmen der Position des beweglichen Elements ausgehend von den vom Vergleichsmodul stammenden Daten.

## Claims

1. Device for measuring movement of a mobile element moving in at least one direction, **characterized in that** it comprises:
- a light source adapted to emit a light beam;
- at least one optical member adapted to intercept the light beam and attached to said mobile element to track its movement;
- at least one pixel type sensor adapted to capture the transmitted beam determined by the relative position of the optical member relative to the light source, the pixels being disposed so that at least some of them receive illumination that varies with the position of the mobile element as it moves;
- a comparator module adapted to compare the values obtained from the pixels of said at least one sensor with two distinct thresholds and to assign them logic values so that:
- all luminous values below the first threshold are assigned the same first logic value;
- all luminous values above the second threshold are assigned the same second logic value;
- all luminous values situated between the two thresholds are respectively assigned a conversion of that representative value into a value adapted to be processed by the calculation means; and
- a calculation module adapted to determine the position of the mobile element from the data from the comparator module.

2. Movement measuring device according to claim 1, **characterized in that** the optical member comprises a mask at least part of the contour of which forms a non-zero angle with said at least one direction of movement of the mobile element.

3. Movement measuring device according to claim 1, **characterized in that** the optical member is adapted to reflect a part of the light beam.

4. Movement measuring device according to any one of claims 1 to 3, **characterized in that** it further includes a second optical member adapted to size the image of the contour of the first optical member and focus it.

5. Movement measuring device according to any one of claims 1 to 4, **characterized in that** at least one sensor is a linear optical sensor formed of at least one row of pixels disposed in a linear pattern.

6. Movement measuring device according to any of claims 1 to 5, **characterized in that** it applies trigonometrical correction to the movements of the optical member in directions other than that of the measured movement.

7. Movement measuring device according to any one of claims 1 to 6, **characterized in that** it further includes a module for addressing the pixels of said at least one sensor in the order of arrival of the data.

8. Movement measuring device according to any one of claims 1 to 7, **characterized in that** it further includes a module for counting pixels of said at least one sensor forming groups according to their address and the logic value that has been assigned to them.

9. Movement measuring device according to either one of claims 7 and 8, **characterized in that** the addressing values of the pixels the captured values of which are situated between said first and second thresholds are compared to the number of pixels counted in each group.

10. Microphone **characterized in that** it includes a movement measurement device according to any one of claims 1 to 9.

11. Method of measuring the movement of a mobile element moving in at least one direction, **characterized in that** it includes the following steps:
- emitting a light beam;
- positioning an optical member adapted to intercept the light beam and connected to said mobile element to track its movement;
- capture by a pixel type sensor of the transmitted beam determined by the relative position of the optical member relative to the light source, the pixels being disposed so that at least some of them receive an illumination varying with the position of the mobile element as it moves:
- comparing the values obtained by capture with two distinct thresholds to assign them logic values so that:
- all luminous values below the first threshold are assigned the same first logic value;
- all luminous values above the second threshold are assigned the same second logic value;
- all luminous values situated between the two thresholds are respectively assigned a digital conversion of that representative value into a value adapted to be processed by the calculation means; and
- determining the position of the mobile element from the data from the comparator module.
